# EUROPÄISCHE PATENTSCHRIFT

(11) **EP 2 497 097 B1**
(45) Veröffentlichungstag und Bekanntmachung des Hinweises auf die Patenterteilung: **31.12.2014**
(21) Anmeldenummer: 10773303.2
(22) Anmeldetag: 29.10.2010
(51) Int. Cl.: H01H 13/00, G02B 6/00

(54) **BELEUCHTETE TASTE FÜR EINE BEDIENANORDNUNG, SOWIE BEDIENANORDNUNG UND HAUSHALTSGERÄT**
ILLUMINATED BUTTON FOR A CONTROL ASSEMBLY, CONTROL ASSEMBLY AND DOMESTIC APPLIANCE
BOUTON POUR ENSEMBLE DE COMMANDE, ENSEMBLE DE COMMANDE ET APPAREIL ÉLECTROMÉNAGER CORRESPONDANT

(30) Priorität: 02.11.2009 DE 102009051617
(43) Veröffentlichungstag der Anmeldung: 12.09.2012
(73) Patentinhaber: PAS Deutschland GmbH, 16816 Neuruppin (DE)
(72) Erfinder: WESTPHAL, Michael, 16356 Ahrensfelde (DE); MEYER, Roland, 16321 Bernau Ortsteil Börnicke (DE)
(74) Vertreter: Witte, Weller & Partner Patentanwälte mbB
(86) Internationale Anmeldenummer: PCT/EP2010/066523
(87) Internationale Veröffentlichungsnummer: WO 2011/051474

(56) Entgegenhaltungen:
- EP-A2- 0 884 525
- DE-A1- 10 058 552
- DE-A1-102005 015 814
- DE-C1- 19 704 419
- DE-U1- 29 715 337

## Beschreibung

Die vorliegende Erfindung betrifft eine Taste für eine Bedienanordnung, insbesondere für eine Bedienanordnung eines Haushaltsgeräts.

Die Erfindung betrifft ferner eine Bedienanordnung mit einer Blende, einem Gehäuseteil, einer Leiterplatte und einer Taste.

Schließlich betrifft die Erfindung auch ein Haushaltsgerät mit einer Taste.

Um ein Haushaltsgerät bedienen zu können, verfügt es in der Regel über Bedienelemente, insbesondere Tasten, die als Teil einer Blendenanordnung - auch Systemblende genannt - am Haushaltsgerät angeordnet sind.

Während Schalter früher lediglich im Sinne einer technischen Notwendigkeit verstanden wurden, ist es mittlerweile anerkannt, dass die Bedienbarkeit eines Haushaltsgeräts, und dabei insbesondere die Bedienung der Tasten, einen erheblichen Einfluss auf eine Kaufentscheidung haben. So erwarten Benutzer bspw. sowohl eine angenehme taktile als auch eine optische Rückmeldung beim Bedienen der Taste.

Zusätzlich zu den Kundenwünschen müssen die Tasten aber auch weitergehende technische Funktionen erfüllen, darunter primär eine sichere und zuverlässige Übertragung einer Betätigungskraft auf ein elektrisches Schaltelement, das der Taste zugeordnet ist. Darüber hinaus soll der Bediener vor einem elektrischen Schlag geschützt sein und die Taste bzw. das zugeordnete elektrische Schaltelement vor einer mechanischen Überbeanspruchung durch den Benutzer geschützt sein. Da moderne Schaltelemente, insbesondere Mikrotaster, in der Regel nicht über eine ausreichende Rückstellkraft verfügen, müssen außerdem zusätzliche konstruktive Maßnahmen ergriffen werden, um die Taste nach einer Betätigung wieder in eine Ruheposition zurückzustellen.

Aus dem Stand der Technik ist eine Vielzahl von Schaltern und Tasten bekannt, die sowohl, im Zusammenspiel mit einem Schaltelement, eine Schaltfunktion bereitstellen als auch eine Beleuchtungsmöglichkeit bieten, um eine Bedienseite des Schalters bzw. der Taste zu ermöglichen. Es soll daher lediglich beispielhaft auf die beiden folgenden Druckschriften eingegangen werden.

Aus US 5,090,791 ist ein faseroptischer Schalter mit Eigenbeleuchtung bekannt. Der Schalter besteht aus einer Verschalung, in der ein Tastschalter geführt ist. Der Tastschalter ist gegen eine Feder verlagerbar. Sowohl in der Verschalung als auch im Tastschalter sind Wellenleiter angeordnet, die Licht von einer Lichtquelle zu einer Bedienseite führen können. In Abhängigkeit von der Position und der Orientierung des Tastschalters relativ zur Verschalung können verschiedene Wellenleiter miteinander gekoppelt werden.

US 5,901,836 zeigt einen Schalter mit einem beleuchteten Knopf. Hier wird vorgeschlagen, bei einem mechanischen Schalter einen Lichtleiter in der Form eines Zylinders vorzusehen, der eine abgeschrägte Fläche aufweist. Dadurch wird es möglich, seitlich, das heißt außerhalb des Bereichs der Mechanik des Schalters, eine Lichtquelle anzubringen und das Licht aus der Lichtquelle über die schräge Fläche in den Lichtleiter einzukoppeln. Das Licht tritt dann am anderen Ende des Zylinders an einer Bedienseite aus.

DE 297 15 337 U1 offenbart ebenfalls eine beleuchtete Taste mit einem Formkörper, der nicht als Ganzes verlagert wird und der auch nicht einstückig ausgebildet ist.

Wenngleich die Schalter und Tasten im Stand der Technik bereits verschiedene Funktionsmerkmale realisieren können, darunter auch die geforderte Beleuchtung einer Taste, ist die Fertigung solcher Tasten mittlerweile recht komplex geworden.

Dies steht aber im Kontrast zum allgemeinen Kostendruck, der auch am Markt für Haushaltsgeräte anzutreffen ist. Es ist daher versucht worden, auf bestimmte Funktionalitäten zu verzichten, darunter insbesondere die Beleuchtung einer Taste, doch hat dies oberhalb des Niedrigpreis-Segments keine Akzeptanz gefunden. Auch Versuche, gewünschte Funktionalitäten in einer vereinfachten Ausführung anzubieten, haben bei den Kunden das Gefühl einer geringeren Wertigkeit des Produkts hervorgerufen.

Es ist daher eine Aufgabe der vorliegenden Erfindung, eine verbesserte Taste für eine Bedienanordnung, insbesondere für eine Bedienanordnung eines Haushaltsgeräts, aufzuzeigen. Die Verbesserung soll insbesondere darin liegen, dass die Taste preiswerter gefertigt werden kann, ohne dabei Funktionalitäten einsparen zu müssen. Zudem sollen auch eine entsprechend verbesserte Bedienanordnung und ein entsprechend verbessertes Haushaltsgerät aufgezeigt werden.

Gemäß einem ersten Aspekt wird die Aufgabe gelöst durch Taste für eine Bedienanordnung, wobei die Taste einen Formkörper aus einem lichtleitenden Material aufweist, der Formkörper mit:
- einer Betätigungsrichtung, in die der Formkörper bei einer Betätigung der Taste verlagert wird,
- einer Funktionsseite, die einen Lichteintrittsbereich und einen Betätigungsbereich aufweist, wobei der Betätigungsbereich dafür ausgebildet ist, bei einer Betätigung der Taste ein Schaltelement zu betätigen,
- einer Bedienseite, die einen Lichtaustrittsbereich aufweist, wobei der Formkörper dafür ausgebildet ist, zumindest einen Anteil eines am Lichteintrittsbereich eintretenden Lichts zum Lichtaustrittsbereich zu führen,
- einem Federvorsprung, der quer zur Betätigungsrichtung einstückig mit dem Formkörper ausgebildet ist und der derart ausgebildet ist, dass er sich beim Zusammenzuwirken mit einem Gehäuseteil elastisch federnd verformt, um bei einer Betätigung der Taste in eine Betätigungsposition eine Rückstellkraft für eine Verlagerung der Taste zurück in eine Ruheposition bereitzustellen,
- einem Kraftbegrenzungselement, das quer zur Betätigungsrichtung einstückig mit dem Formkörper ausgebildet ist und dafür ausgebildet ist, bei einem Zusammenwirken des Betätigungsbereichs mit dem Schaltelement eine überschüssige Betätigungskraft durch eine federnde Verlagerung des Kraftbegrenzungselements aufzunehmen, und
- einem ersten Vorsprung, der einstückig mit dem Formkörper ausgebildet ist und der dafür ausgebildet ist mit einem Gehäuseteil zusammenzuwirken, um so einen Endanschlag für eine Betätigung der Taste zu bilden.

Die erfindungsgemäße Taste bietet u.a. den Vorteil, dass der vorgeschlagene Formkörper eine Vielzahl von Funktionen vereint. So bietet der Formkörper sowohl eine Beleuchtungsfunktion mittels des Lichteintrittsbereichs und des Lichtaustrittsbereichs, eine Betätigungsfunktion mittels ihres Betätigungsbereichs als auch eine Rückstellfunktion mittels des Federvorsprungs. Zudem wird mittels des Kraftbegrenzungselements ein effektiver Überlastungsschutz ermöglicht: Wird das Kraftbegrenzungselement gegen das Schaltelement gedrückt, so verformt es sich elastisch. Verliert das Auffangelement den Kontakt zum Schaltelement, so kehrt das Auffangelement in seine Ruheposition zurück.

Die Federwirkung des Federvorsprungs und die Charakteristik des Kraftbegrenzungselements können durch geeignete Wahl der Geometrie des Federvorsprungs bzw. des Kraftbegrenzungselements und des Materials des Formkörpers beeinflusst werden. Soll für die Taste bspw. ein eher starres Material verwendet werden, so kann durch eine hinreichende Länge des Federvorsprungs die gewünschte Verformbarkeit und die Rückstellkraft erzielt werden. Ist der Formkörper aus einem etwas weicheren Material, so kann durch einen kürzeren und/oder dickeren Federvorsprung eine ausreichende Rückstellkraft erzielt werden. Gleiche Überlegungen gelten für das Kraftbegrenzungselement.

Der erste Vorsprung ist verhältnismäßig starr ausgebildet, so dass sich der erste Vorsprung bei einer Kraftbeaufschlagung im Wesentlichen nicht verformt oder verlagert. Da der erste Vorsprung aus demselben Material gefertigt ist wie der Federvorsprung, wobei sich der Federvorsprung ja elastisch federnd verformen soll, wird der erste Vorsprung bevorzugt kurz und/oder und dick - bezogen auf die Betätigungsrichtung - ausgeführt. Dies im Vergleich zum Federvorsprung, der eher länglich und dünn ausgeführt wird. Da der erste Vorsprung eine Betätigung der Taste über einen bestimmten Punkt hinaus verhindert, dient der erste Vorsprung auch als Schutz für den Federvorsprung, dass sich dieser nicht zu weit verbiegt.

Der vorgeschlagene Aufbau ist insbesondere bei Tasten mit einem kurzen Tastenhub vorteilhaft, da die bekannten mehrteiligen Tastenaufbauten aufgrund der Summe der Toleranzen der Einzelteile einen erheblichen Fehler bezogen auf den Tastenhub haben können. Die vorgeschlagene Taste verringert daher effektiv die Gefahr eines Dauerschaltens oder eines Nichterreichens eines Schaltpunkts.

Im Gegensatz zu den herkömmlichen Schaltern und Tasten aus dem Stand der Technik vereint die Erfindung nun mehrere Funktionen in einem einstückigen Formkörper. Außerdem, wie aus den nachfolgenden Erläuterungen noch deutlich werden wird, bietet der vorgeschlagene Formkörper noch Möglichkeiten für zusätzliche funktionale Erweiterungen.

Ein weiterer Vorteil, der sich durch den Formkörper realisiert werden kann, ist ein Schutz der Elektronik vor Flüssigkeiten (Sicherheitsaspekt). Dringt Flüssigkeit von der Bedienblende im Bereich der Taste ein, so wird die Flüssigkeit an einem Vordringen in Richtung Platine gehindert: Die Flüssigkeit wird vom Formkörper aufgehalten und tropft der Schwerkraft folgend nach unten. Dazu wird der Formkörper, insbesondere im Bereich des Federvorsprungs, mit einer plattenähnlichen Verbreiterung ausgebildet, wobei die Ebene der Verbreiterung zumindest in etwa senkrecht zur Betätigungsrichtung der Taste steht.

Aufgrund der Einstückigkeit des Formkörpers wird der Formkörper bevorzugt mittels eines Spritzgussverfahrens gefertigt. Dadurch wird es besonders vorteilhaft möglich, eine Taste, insbesondere eine Kurzhubtaste, mit Rückstelleigenschaften und Beleuchtungseigenschaften in einem Spritzgussteil zu vereinen.

Unter dem Begriff "quer zur Betätigungsrichtung" soll hier und im Folgenden verstanden werden, dass sich ein Element, hier: der Federvorsprung, in eine Richtung erstreckt, die zur Betätigungsrichtung in einem Winkel von mindestens 15°, bevorzugt mindestens 30°, besonders bevorzugt von mindestens 45° und insbesondere von mindestens 60° steht.

Damit ist die Aufgabe vollständig gelöst.

Bei einer vorteilhaften Ausgestaltung der Erfindung ist das Kraftbegrenzungselement als ein erster Steg mit einer ersten Längsseite und einer ersten Querseite ausgebildet, wobei die erste Längsseite bevorzugt länger als die erste Querseite ist, besonders bevorzugt mehr als doppelt so lang wie die erste Querseite ist.

Diese Ausgestaltung ist kostengünstig zu realisieren und bietet eine einfache Möglichkeit, die Charakteristik des Kraftbegrenzungselements im Hinblick auf das Material des Formkörpers einzustellen. Wenn die Biegung des Kraftbegrenzungselements entlang der Längsseite stattfindet, erhöht man die Steifigkeit des Kraftbegrenzungselements indem man die wirksame Längsseite verkürzt, die Querseite verbreitert und/oder die Hochseite verstärkt.

Bei einer weiteren vorteilhaften Ausgestaltung der Erfindung ist der Federvorsprung als ein zweiter Steg mit einer zweiten Längsseite und einer zweiten Querseite ausgebildet, wobei die zweite Längsseite bevorzugt länger als die zweite Querseite ist, besonders bevorzugt mehr als doppelt so lang und insbesondere mehr als dreimal so lang wie die zweite Querseite ist.

Auch diese Ausgestaltung ist kostengünstig zu realisieren und bietet eine einfache Möglichkeit, die Charakteristik des Federvorsprungs im Hinblick auf das Material des Formkörpers einzustellen. Wenn die Biegung des Federvorsprungs entlang der Längsseite stattfindet, erhöht man die Elastizität des Kraftbegrenzungselements indem man die wirksame Längsseite verlängert, die Querseite verschmälert und/oder die Hochseite ausdünnt. Besonders vorteilhaft ist es in diesem Zusammenhang, wenn der Formkörper mindestens zwei, insbesondere mindestens drei Federvorsprünge aufweist, die sich bevorzugt alle zumindest etwa in einer Ebene erstrecken. Dadurch kann eine besonders gleichmäßige Federwirkung erzielt werden.

Bei einer weiteren vorteilhaften Ausgestaltung der Erfindung weist der Formkörper quer zur Betätigungsrichtung einen zweiten Vorsprung auf, der einstückig mit dem Formkörper ausgebildet ist und der dafür ausgebildet ist, mit einer Blende zusammenzuwirken, um so einen Ruheanschlag für eine Ruheposition der Taste zu bilden.

Diese Ausführungsform ermöglicht ein besonders einfaches Festlegen des Beginns des Hubwegs. Für die Ausgestaltung des zweiten Vorsprungs gelten die Ausführungen zur Ausgestaltung des ersten Vorsprungs. Da der Benutzer bei einer Betätigung der Taste aber keine Kraft direkt gegen den zweiten Vorsprung ausüben kann, muss der zweite Vorsprung nicht dieselben Stabilitätsanforderungen erfüllen wie der erste Vorsprung.

Bei einer weiteren vorteilhaften Ausgestaltung der Erfindung weist der Formkörper parallel zur Betätigungsrichtung ein Führungselement auf, das einstückig mit dem Formkörper ausgebildet ist und das dafür ausgebildet ist, die Taste während einer Betätigung entlang der Betätigungsrichtung zu führen.

Diese Ausführungsform kann eine besonders gute Führung der Taste während ihrer Bewegung ermöglichen. Dabei ist es insbesondere vorteilhaft, wenn das Führungselement mit einem Führungsgegenelement an einem Gehäuseteil zusammenwirkt. Dabei ist das Führungselement vorteilhafterweise als länglicher Vorsprung - bezogen auf die Betätigungsrichtung - ausgeführt und das Führungsgegenelement als Ausnehmung ausgeführt.

Bei einer weiteren vorteilhaften Ausgestaltung der Erfindung ist die Bedienseite zumindest ungefähr parallel zur Funktionsseite und ist insbesondere der Betätigungsbereich parallel zum Lichteintrittsbereich, bevorzugt in einer gemeinsamen Ebene, angeordnet.

Diese Ausführungsform der Taste ermöglicht einen besonders vorteilhaften Aufbau der Bedienanordnung, in den die Taste später eingebaut wird. Wenn die Bedienseite zumindest ungefähr parallel zur Funktionsseite ist, kann die Bedienanordnung konstruktiv einfach in einer Art Sandwich-Bauweise von Blende, Gehäuseteil und Leiterplatte mit der dazwischen angeordneten Taste realisiert werden.

Bei einer weiteren vorteilhaften Ausgestaltung der Erfindung, die auch für sich alleine genommen, also auch ohne den Federvorsprung, das Kraftbegrenzungselement und den ersten Vorsprung, eine eigenständige erfinderische Weiterbildung des Stands der Technik darstellt, ist im Formkörper eine erste Reflektionsfläche angeordnet, die ein vom Lichteintrittsbereich kommendes Licht derart ablenkt, dass es zum Lichtaustrittsbereich geführt werden kann, wobei die erste Reflektionsfläche insbesondere durch eine Grenzfläche einer Ausnehmung innerhalb des Formkörpers gebildet ist.

Während es üblicherweise bekannt ist, äußere Grenzflächen eines Formkörpers für eine Lichtreflexion oder Lichtbrechung zu verwenden, wird hier eine Grenzfläche innerhalb des Formkörpers vorgeschlagen, wodurch in vorteilhafter Weise die äußere Formgebung des Formkörpers weitestgehend unabhängig von der innenliegenden Grenzfläche gewählt werden kann.

Mittels der Reflexionsfläche wird das vom Lichteintrittsbereich kommende Licht abgelenkt und dann zum Lichtaustrittsbereich weitergeführt. Dadurch wird eine-innerhalb bestimmter Rahmenbedingungen - frei wählbare Positionierbarkeit von Lichteintrittsbereich, Lichtaustrittsbereich und Betätigungsbereich ermöglicht. Dabei ist die erste Reflexionsfläche insbesondere derart angeordnet, dass eine sich an der Reflexionsfläche reflektierende Lichtquelle in etwa mittig an der Bedienseite erscheint. Dadurch kann man ein homogenes Leuchtergebnis erzielen.

Bei einer weiteren vorteilhaften Ausgestaltung der Erfindung weist das Licht im Formkörper am Lichteintrittsbereich eine erste Lichthauptgerade und am Lichtaustrittsbereich eine zweite Lichthauptgerade auf, wobei erste und zweite Lichthauptgerade zumindest ungefähr parallel zueinander sind.

Diese Ausgestaltung ermöglicht einen konstruktiv einfachen Aufbau. Vereinfacht gesagt, tritt Licht an einer ersten Stelle mit einer ersten Richtung, "erste Lichthauptgerade", in den Formkörper ein und verlässt den Formkörper an einem zweiten Punkt in einer zweiten Richtung, "zweite Lichthauptgerade". Das Licht tritt dabei insbesondere in eine Unterseite des Formkörpers ein und an einer Oberseite des Formkörpers aus, wobei die zweite Lichthauptgerade aber nicht mit der ersten Lichthauptgeraden zusammenfällt.

Bei einer weiteren vorteilhaften Ausgestaltung der Erfindung liegt der Betätigungsbereich dem Lichtaustrittsbereich bei einer Betrachtung entlang der Betätigungsrichtung gegenüber.

Diese Ausgestaltung ist vorteilhaft, weil eine Kraft, die der Benutzer an der Bedienseite auf die Taste, und damit auf den Formkörper, aufbringt, direkt entlang einer möglichst kurzen Strecke zwischen Betätigungsbereich und Lichtaustrittsbereich auf das Schaltelement wirken kann. Dadurch kann ein Verkanten oder Kippen des Formkörpers verringert bzw. verhindert werden.

Als Anhaltspunkt, ob der Betätigungsbereich dem Lichtaustrittsbereich gegenüberliegt, soll insbesondere geprüft werden, ob Betätigungsbereich und Lichtaustrittsbereich bei einer Betrachtung entlang der Betätigungsrichtung überlappen. Sofern dies zumindest teilweise der Fall ist, liegt der Betätigungsbereich dem Lichtaustrittsbereich gegenüber.

In diesem Zusammenhang ist es außerdem vorteilhaft, wenn der Lichteintrittsbereich dem Lichtaustrittsbereich nicht gegenüberliegt. Diese Ausgestaltung hat den Vorteil, dass das Einbringen von Licht in den Formkörper unabhängig von der Positionierung von Betätigungsbereich und Lichtaustrittsbereich gewählt werden kann. Dies eröffnet zusätzliche Gestaltungsmöglichkeiten bei der Formgebung des Formkörpers.

Bei einer weiteren vorteilhaften Ausgestaltung der Erfindung ist die erste Reflexionsfläche durch eine Grenzfläche einer Ausnehmung innerhalb des Formkörpers gebildet.

Diese Ausgestaltung ermöglicht es auf einfache Weise, die erste Reflektionsfläche im Formkörper auszugestalten. Wenngleich es im Hinblick auf eine kostengünstige Fertigung als vorteilhaft angesehen wird, die Grenzfläche mittels einer Ausnehmung zu schaffen, sei darauf hingewiesen, dass sich eine derartige Grenzfläche innerhalb des Formkörpers auch auf andere Weise einbringen lässt. So lassen sich insbesondere durch eine Behandlung mit Impulslasern Mikrorisse im Inneren des Formkörpers einbringen, die als diffus wirkende Reflexionsfläche dienen können.

Bei einer weiteren vorteilhaften Ausgestaltung der Erfindung weist der Formkörper einen Hauptkörper und einen Fortsatz mit einem Querabschnitt und einem Längsabschnitt auf, wobei der Betätigungsbereich und der Lichtaustrittsbereich an dem Hauptkörper und der Lichteintrittsbereich an dem Fortsatz angeordnet sind und wobei der Querabschnitt quer zur Betätigungsrichtung vom Hauptkörper absteht und in den Längsabschnitt übergeht, der vom Hauptkörper beabstandet ist und sich insbesondere zumindest ungefähr parallel zur Betätigungsrichtung erstreckt.

Diese Ausgestaltung trägt besonders gut der Situation Rechnung, dass sich auf einer elektrischen Platine, die im Zusammenhang mit einer solchen Taste verwendet wird, Lichtquelle und Schaltelement nur voneinander beabstandet realisieren lassen. Bei dieser Ausgestaltung ist es möglich, die Lichtquelle gegenüber dem Schaltelement zu versetzen und dennoch das Licht auf einfache Weise in den Hauptkörper einzukoppeln.

Bei einer weiteren vorteilhaften Ausgestaltung der Erfindung weist der Fortsatz eine zweite Reflexionsfläche auf, die ein am Lichteintrittsbereich eintretendes Licht in Richtung des Hauptkörpers reflektiert und wobei die zweite Reflexionsfläche insbesondere durch eine äußere Grenzfläche des Fortsatzes bereitgestellt ist.

Diese Ausgestaltung bietet die Möglichkeit, den Lichteintrittsbereich auf einfache Weise vom Betätigungsbereich entfernt anordnen zu können, und zwar insbesondere in Abhängigkeit von einer Anordnung von Lichtquelle und Schaltelement auf einer zugeordneten Leiterplatte.

Bei einer weiteren vorteilhaften Ausgestaltung der Erfindung sind die erste und die zweite Reflexionsfläche so angeordnet, dass Licht, das am Lichteintrittsbereich eintritt, zunächst zumindest ungefähr parallel zur Betätigungsrichtung zur zweiten Reflexionsfläche geführt wird, dort in eine Richtung quer zur Betätigungsrichtung reflektiert und zur ersten Reflexionsfläche geführt wird, dort in eine Richtung zumindest ungefähr parallel zur Betätigungsrichtung reflektiert und dann zum Lichtaustrittsbereich geführt wird.

Die Ausgestaltung ermöglicht einen besonders einfachen Aufbau des Formkörpers. Der Begriff "quer" soll auch hier dahingehend verstanden werden, dass der Winkel zur Betätigungsrichtung mindestens 15°, bevorzugt mindestens 30°, besonders bevorzugt mindestens 45° und insbesondere mindestens 60° beträgt.

Bei einer weiteren vorteilhaften Ausgestaltung der Erfindung sind die erste und die zweite Reflexionsfläche zumindest ungefähr in einem Winkel α zwischen 20° und 70°, bevorzugt zwischen 30° und 60°, besonders bevorzugt zwischen 40° und 50° und insbesondere von zumindest ungefähr 45° zur Betätigungsrichtung angeordnet.

Diese Ausgestaltung ermöglicht eine besonders günstige Strahlführung innerhalb des Formkörpers.

Gemäß einem weiteren Aspekt der Erfindung wird die Aufgabe gelöst durch eine Bedienanordnung mit einer Blende, einem Gehäuseteil, einer Leiterplatte und einer zuvor beschriebenen Taste, wobei die Leiterplatte eine Lichtquelle und ein Schalelement aufweist und wobei die Taste an der Blende und am Gehäuseteil derart verlagerbar gehalten ist, dass die Taste bei einer Betätigung gegen das Schaltelement drückt und das Schaltelement betätigt.

Die Lichtquelle ist dabei derart angeordnet, dass sie in den Lichteintrittsbereich strahlt, und das Schaltelement ist gegenüber von dem Betätigungsbereich angeordnet.

Gemäß einem weiteren Aspekt der Erfindung wird die Aufgabe gelöst durch ein Haushaltsgerät mit einer zuvor beschriebenen Taste.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: ein Haushaltsgerät mit mehreren Tasten;
- Fig. 2: ein erstes Ausführungsbeispiel einer Bedienanordnung mit mehreren Tasten;
- Fig. 3: eine dreidimensionale Ansicht eines ersten Ausführungsbeispiels einer Taste;
- Fig. 4: eine seitliche Draufsicht auf die Taste gemäß Fig. 3 mit zugehöriger Abdeckung und Leiterplatte;
- Fig. 5: ein zweites Ausführungsbeispiel einer Bedienanordnung; und
- Fig. 6: ein zweites Ausführungsbeispiel einer Taste.

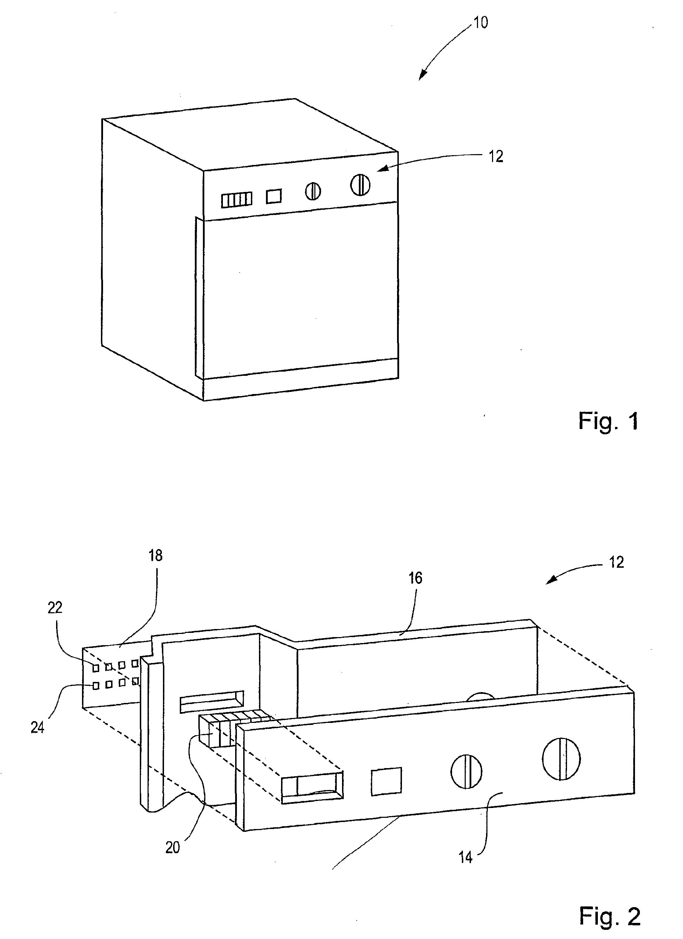

Fig. 1 zeigt ein Haushaltsgerät 10 mit einer Bedienanordnung 12. Bei dem hier gezeigten Ausführungsbeispiel handelt es sich um einen Geschirrspüler.

Fig. 2 zeigt die Bedienanordnung des Haushaltsgeräts 10. Sie weist eine Blende 14, ein Gehäuseteil 16 und eine Leiterplatte 18 auf. Zwischen der Blende 14 und dem Gehäuseteil 16 ist mindestens eine Taste 20 angeordnet, hier: sechs Tasten 20. Mittels der gestrichelten Linien ist angedeutet, wie die einzelnen Teile für das fertige Haushaltsgerät 10 zusammengesetzt werden.

Auf der Leiterplatte 18 sind mehrere Lichtquellen 22 und mehrere Schaltelemente 24 angeordnet. Bei der hier gezeigten Ausführungsform ist jeder Taste 20 eine Lichtquelle 22 und ein Schaltelement 24 zugeordnet. Die Tasten 20 sind an der Blende 14 und am Gehäuseteil 16 derart verlagerbar gehalten, dass sich jede der Tasten 20 bei einer Betätigung gegen das entsprechende Schaltelement 24 drücken und das jeweilige Schaltelement 24 betätigen.

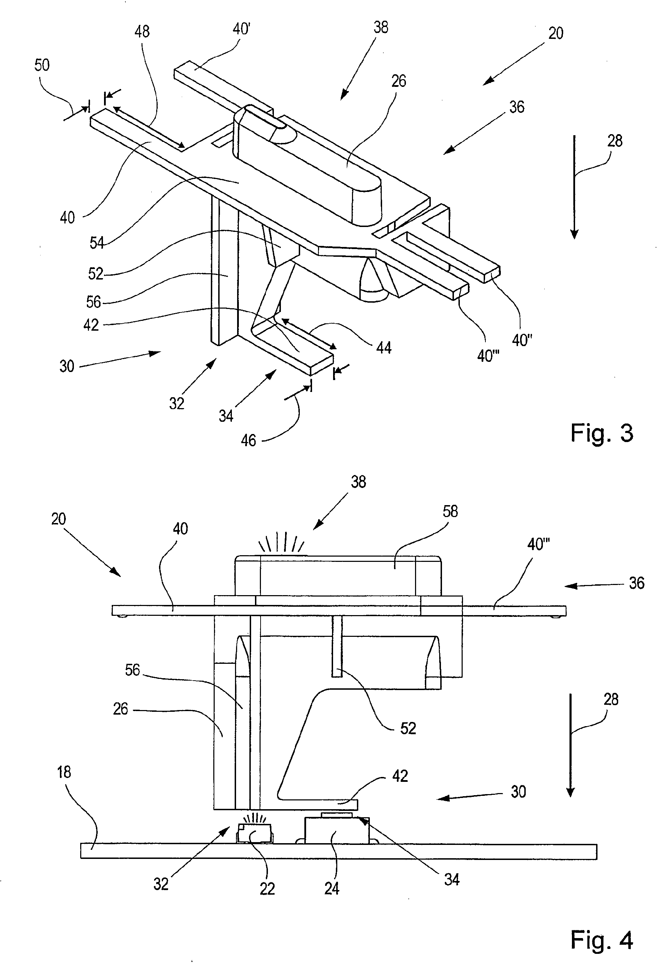

Fig. 3 zeigt ein erstes Ausführungsbeispiel einer Taste 20 für eine Bedienanordnung 12. Die Taste 20 weist einen Formkörper 26 aus einem lichtleitenden Material auf, wobei der Formkörper 26 eine Betätigungsrichtung 28 hat, in die er bei einer Betätigung der Taste 20 verlagert wird.

Der Formkörper 26 weist eine Funktionsseite 30 auf, die einen Lichteintrittsbereich 32 und einen Betätigungsbereich 34 aufweist. Der Lichteintrittsbereich 32 ist dafür ausgebildet, über eine Grenzfläche des Formkörpers 26 Licht in den Formkörper 26 einzukoppeln. Der Betätigungsbereich 34 ist dafür ausgebildet, bei einer Betätigung der Taste 20 ein Schaltelement 24 zu betätigen.

Der Formkörper 26 hat außerdem eine Bedienseite 36, die einen Lichtaustrittsbereich 38 aufweist, wobei der Lichtaustrittsbereich 38 derart ausgebildet ist, dass im Formkörper 26 befindliches Licht an einer weiteren Grenzfläche des Formkörpers 26 ausgekoppelt werden kann. Der Formkörper 26 ist dafür ausgebildet, zumindest einen Anteil eines am Lichteintrittsbereich 32 eintretenden Lichts zum Lichtaustrittsbereich 38 zu führen.

Am Formkörper 26 sind des Weiteren die folgenden Elemente einstückig mit dem Formkörper 26 ausgebildet:
- Ein Federvorsprung 40, hier: vier Federvorsprünge 40, 40', 40", 40"', der quer zur Betätigungsrichtung 28 ausgebildet ist und der derart ausgebildet ist, dass er sich beim Zusammenwirken mit einem Gehäuseteil 16 elastisch federnd verformt, um bei einer Betätigung der Taste 20 in eine Betätigungsposition eine Rückstellkraft für eine Verlagerung der Taste 20 zurück in eine Ruheposition bereitzustellen.
- Ein Kraftbegrenzungselement 42, das quer zur Betätigungsrichtung 28 ausgebildet ist und dafür ausgebildet ist, bei einem Zusammenwirken des Betätigungsbereichs 34 mit dem Schaltelement 24 eine überschüssige Betätigungskraft durch eine federnde Verlagerung des Kraftbegrenzungselements 42 aufzunehmen.
- Ein erster Vorsprung 52, der dafür ausgebildet ist, mit einem Gehäuseteil 16 zusammenzuwirken, um so einen Endanschlag für eine Betätigung der Taste 20 zu bilden.

Das Kraftbegrenzungselement 42 ist als ein erster Steg mit einer ersten Längsseite 44 und einer ersten Querseite 46 ausgebildet, wobei die erste Längsseite 44 hier in etwa doppelt so lang wie die erste Querseite 46 ist. Der Federvorsprung 40 ist als ein zweiter Steg mit einer zweiten Längsseite 48 und einer zweiten Querseite 50 ausgebildet, wobei die zweite Längsseite 48 hier in etwa dreimal so lang ist wie die zweite Querseite 50.

Ferner ist am Formkörper 26 quer zur Betätigungsrichtung ein zweiter Vorsprung 54 einstückig mit dem Formkörper 26 ausgebildet. Der zweite Vorsprung 54 ist dafür ausgebildet, mit einer Blende 14 zusammenzuwirken, um so einen Ruheanschlag für eine Ruheposition der Taste 20 zu bilden. Bei der hier gezeigten Ausführungsform hat der zweite Vorsprung 54 die Form einer Fläche, über die der Lichtaustrittsbereich 38 hinausragt. Betrachtet man die Ausdehnung des zweiten Vorsprungs 54 senkrecht zur Betätigungsrichtung 28 im Vergleich zur Ausdehnung des Lichtaustrittsbereichs 38 senkrecht zur Betätigungsrichtung 28 so ist die Ausdehnung des zweiten Vorsprungs 54 größer, insbesondere deutlich größer, d.h. bevorzugt mindestens 1,5 mal so groß und besonders bevorzugt zweimal so groß.

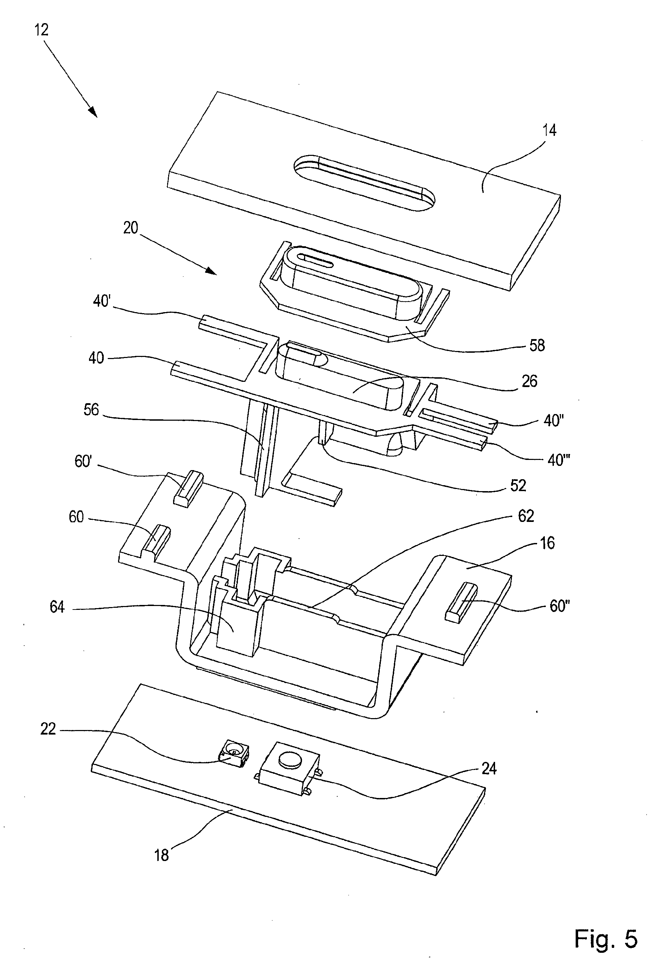

Am Formkörper 26 ist außerdem parallel zur Betätigungsrichtung 28 ein Führungselement 56 einstückig mit dem Formkörper 26 ausgebildet. Das Führungselement 56 ist dafür ausgebildet, die Taste 20 während einer Betätigung entlang der Betätigungsrichtung 28 zu führen. Genauer gesagt, wird die Führung im Zusammenspiel mit einem Führungsgegenelement 64 (siehe Fig. 5) am Gehäuseteil 16 erzielt.

Die gezeigte Taste 20 hat u.a. den Vorteil, dass der Formkörper 26 mit all seinen Funktionsbereichen einstückig gefertigt ist. Insbesondere vereint die gezeigte Taste 20 eine Rückstellfunktion, einen Überlastschutz und zudem Beleuchtungseigenschaften in einem Formkörper 26. Dies führt, insbesondere bei einer Verwendung als Kurzhubtaste, zu erheblichen Erleichterungen und Kosteneinsparungen.

Betrachtet man den Formkörper 26 ist festzustellen, dass die Bedienseite 36 zumindest ungefähr parallel zur Funktionsseite 30 ist. Zudem ist der Betätigungsbereich 34 parallel zum Lichteintrittsbereich 32, hier insbesondere in einer gemeinsamen Ebene angeordnet. Außerdem sind der zweite Vorsprung 54 und die Federvorsprünge 40, 40', 40", 40"' in einer gemeinsamen weiteren Ebene angeordnet.

Fig. 4 zeigt den Formkörper 26 in einer Seitenansicht, wobei gleichzeitig zur Verdeutlichung der Funktionen der Funktionsseite 30 und der Bedienseite 36 eine Leiterplatte 18 mit einer Lichtquelle 22 und einem Schaltelement 24, hier einem Mikrotaster, sowie eine Abdeckkappe 58 dargestellt sind. Es ist zu erkennen, dass der Formkörper 26 bei einer Betätigung der Taste 20 in Betätigungsrichtung 28 mit dem Betätigungsbereich 34 am Kraftbegrenzungselement 42 das Schaltelement 24 betätigt. Wird die Taste 20 etwas zu kräftig gedrückt, so gibt das Kraftbegrenzungselement 42 federnd nach. Die Abdeckkappe 58 bewirkt, dass der Lichtaustrittsbereich 38 gezielt definiert werden kann.

In dieser seitlichen Betrachtung ist zu erkennen, dass der Formkörper in etwa ein "C" bildet, wobei der obere Teil des "C" von der Bedienseite 36 gebildet ist, und der untere Teil des "C" von der Funktionsseite 30 gebildet ist. Das untere freie Ende des "C" beinhaltet den Betätigungsbereich 34.

Fig. 5 zeigt in einer vereinfachten Explosionsansicht, wie der Formkörper 26 gemäß Fig. 3 der Taste 20 in einer Bedienanordnung 12 integriert ist. Anhand dieser Darstellung ist zusätzlich zu erkennen, dass die Federvorsprünge 40, 40', 40", 40"' mit Gegenlagern 60, 60', 60" am Gehäuseteil 16 zusammenwirken.

Der erste Vorsprung 52 wirkt mit einem Anschlag 62 am Gehäuseteil 16 zusammen. Das Führungselement 56 wird in einem Führungsgegenelement 64 geführt, das am Gehäuseteil 16 ausgebildet ist. Das Gehäuseteil 16 hat die Form einer Wanne bzw. eines "U", wobei die Wanne breite Randbereiche aufweist, auf denen die Gegenlager 60, 60', 60" angeordnet sind. In der Wanne vertieft bzw. im unteren Bereich des "U" sind der Anschlag 62 und das Führungsgegenelement 64 angeordnet.

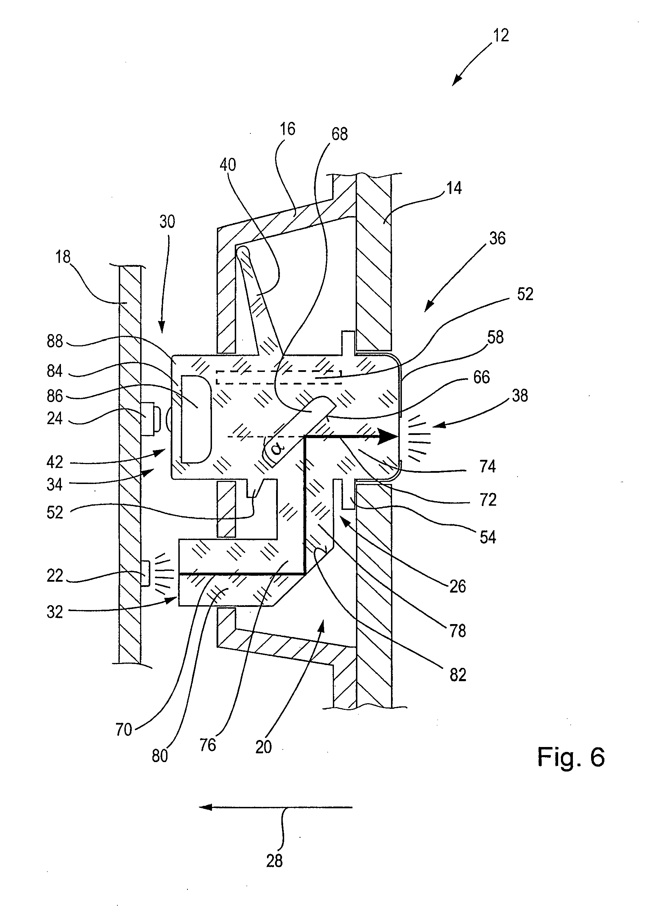

Fig. 6 zeigt eine zweite Ausführungsform einer Taste 20 in einer Bedienanordnung 12, die auch für sich genommen eine eigenständige und unabhängige Weiterentwicklung gegenüber dem Stand der Technik darstellt. Auch bei dieser Ausführungsform gelten dieselben Bezugszeichen für dieselben funktionalen Elemente, auch wenn diese anders ausgebildet sind.

Dabei liegt eine Besonderheit dieser Ausführungsform darin, dass im Formkörper 26 eine erste Reflektionsfläche 66 angeordnet ist, die ein vom Lichteintrittsbereich 32 kommendes Licht derart ablenkt, dass es zum Lichtaustrittsbereich 38 geführt wird, wobei die erste Reflektionsfläche 66, insbesondere durch eine Grenzfläche einer Ausnehmung 68 innerhalb des Formkörpers 26 gebildet ist.

Das Licht im Formkörper 26 weist am Lichteintrittsbereich 32 eine erste Lichthauptgerade 70 und am Lichtaustrittsbereich 38 eine zweite Lichthauptgerade 72 auf, wobei die erste und zweite Lichthauptgerade 70, 72 zumindest ungefähr parallel zueinander sind. Bei einer Betrachtung entlang der Betätigungsrichtung 28 liegt der Betätigungsbereich 34 dem Lichtaustrittsbereich 38 gegenüber. Dies ist im Hinblick auf die mechanische Betätigung des Schaltelements 24 vorteilhaft.

Eine weitere Besonderheit dieses Ausführungsbeispiels liegt darin, dass der Formkörper 26 einen Hauptkörper 74 und einen Fortsatz 76 mit einem Querabschnitt 78 und einem Längsabschnitt 80 aufweist. Der Betätigungsbereich 34 und der Lichtaustrittsbereich 38 sind am Hauptkörper 74 und der Lichteintrittsbereich 32 ist am Fortsatz 76 angeordnet. Der Querabschnitt 78 steht quer, hier: in etwa im rechten Winkel, zur Betätigungsrichtung 28 vom Hauptkörper 74 ab und geht in den Längsabschnitt 80 über. Der Längsabschnitt 80 ist vom Hauptkörper 74 beabstandet und erstreckt sich zumindest ungefähr parallel zur Betätigungsrichtung 28.

Der Fortsatz 76 weist eine zweite Reflektionsfläche 82 auf, die ein am Lichteintrittsbereich 32 eintretendes Licht in Richtung des Hauptkörpers 74 reflektiert, wobei die zweite Reflektionsfläche 82 durch eine äußere Grenzfläche des Fortsatzes 76 bereitgestellt ist.

Insgesamt sind die erste und die zweite Reflektionsfläche 66, 82 so angeordnet, dass Licht, das am Lichteintrittsbereich 32 eintritt, zunächst zumindest ungefähr parallel zur Betätigungsrichtung 28 zur zweiten Reflektionsfläche 82 geführt wird, dort in eine Richtung quer zur Betätigungsrichtung 28, insbesondere senkrecht zur Betätigungsrichtung 28, reflektiert und von dort zur ersten Reflektionsfläche 66 geführt wird. Von dort wird das Licht dann in eine Richtung zumindest ungefähr parallel zur Betätigungsrichtung 28 reflektiert und dann zum Lichtaustrittsbereich 38 geführt.

Die erste und die zweite Reflektionsfläche 66, 82 sind zumindest ungefähr in einem Winkel α = 45° zur Betätigungsrichtung 28 angeordnet.

Das Kraftbegrenzungselement 42 ist bei dieser Ausführungsform durch eine elastische Schicht 84 realisiert, die mit dem Formkörper 26 einstückig ausgebildet ist, indem in den Formkörper 26 eine weitere Ausnehmung 86 eingebracht wurde. Wird das Kraftbegrenzungselement 42 gegen das Schaltelement 24 gedrückt, so verformt sich die Schicht 84 in die Ausnehmung 86 hinein. Besonders vorteilhaft kann die Ausgestaltung so gewählt sein, dass der Rand 88 der Ausnehmung 86 gegen die Leiterplatte 18 anliegen kann, um auch eine große Kraft aufnehmen zu können.

Damit wurden insgesamt eine neuartige Taste, eine neuartige Bedienanordnung und ein neuartiges Haushaltsgerät aufgezeigt, die sich kostengünstiger und einfacher fertigen lassen.

## Patentansprüche

1. Taste (20) für eine Bedienanordnung (12), wobei die Taste einen einstückigen Formkörper (26) aus einem lichtleitenden Material aufweist, der Formkörper (26) mit:
- einer Betätigungsrichtung (28), in die der Formkörper (26) bei einer Betätigung der Taste (20) verlagert wird,
- einer Funktionsseite (30), die einen Lichteintrittsbereich (32) und einen Betätigungsbereich (34) aufweist, wobei der Betätigungsbereich (34) dafür ausgebildet ist, bei einer Betätigung der Taste (20) ein Schaltelement (24) zu betätigen,
- einer Bedienseite (36), die einen Lichtaustrittsbereich (38) aufweist, wobei der Formkörper (26) dafür ausgebildet ist, zumindest einen Anteil eines am Lichteintrittsbereich (32) eintretenden Lichts zum Lichtaustrittsbereich (38) zu führen,
- einem Federvorsprung (40), der quer zur Betätigungsrichtung (28) einstückig mit dem Formkörper (26) ausgebildet ist und der derart ausgebildet ist, dass er sich beim Zusammen wirken mit einem Gehäuseteil (16) elastisch federnd verformt, um bei einer Betätigung der Taste (20) in eine Betätigungsposition eine Rückstellkraft für eine Verlagerung der Taste (20) zurück in eine Ruheposition bereitzustellen,
- einem Kraftbegrenzungselement (42), das quer zur Betätigungsrichtung einstückig mit dem Formkörper (26) ausgebildet ist und dafür ausgebildet ist, bei einem Zusammenwirken des Betätigungsbereichs (28) mit dem Schaltelement (24) eine überschüssige Betätigungskraft durch eine federnde Verlagerung des Kraftbegrenzungselements (42) aufzunehmen, und
- einem ersten Vorsprung (52), der einstückig mit dem Formkörper (26) ausgebildet ist und der dafür ausgebildet ist, mit einem Gehäuseteil (16) zusammenzuwirken, um so einen Endanschlag für eine Betätigung der Taste (20) zu bilden.

2. Taste nach Anspruch 1, wobei das Kraftbegrenzungselement (42) als ein erster Steg mit einer ersten Längsseite (44) und einer ersten Querseite (46) ausgebildet ist und wobei die erste Längsseite (44) bevorzugt länger als die erste Querseite (46) ist, besonders bevorzugt mehr als doppelt so lang wie die erste Querseite (46) ist.

3. Taste nach einem der vorhergehenden Ansprüche, wobei der Federvorsprung (40) als ein zweiter Steg mit einer zweiten Längsseite (48) und einer zweiten Querseite (50) ausgebildet ist und wobei die zweite Längsseite (48) bevorzugt länger als die zweite Querseite (50) ist, besonders bevorzugt mehr als doppelt so lang und insbesondere mehr als dreimal so lang wie die zweite Querseite (50) ist.

4. Taste nach einem der vorhergehenden Ansprüche, wobei der Formkörper (26) quer zur Betätigungsrichtung (28) einen zweiten Vorsprung (54) aufweist, der einstückig mit dem Formkörper (26) ausgebildet ist und der dafür ausgebildet ist mit einer Blende (14) zusammenzuwirken, um so einen Ruheanschlag für eine Ruheposition der Taste (20) zu bilden.

5. Taste nach einem der vorhergehenden Ansprüche, wobei der Formkörper (26) parallel zur Betätigungsrichtung (28) ein Führungselement (56) aufweist, das einstückig mit dem Formkörper (26) ausgebildet ist und das dafür ausgebildet ist, die Taste (20) während einer Betätigung entlang der Betätigungsrichtung (28) zu führen.

6. Taste nach einem der vorhergehenden Ansprüche, wobei die Bedienseite (36) zumindest ungefähr parallel zur Funktionsseite (30) ist und insbesondere der Betätigungsbereich (34) parallel zum Lichteintrittsbereich (32), bevorzugt in einer gemeinsamen Ebene, angeordnet ist.

7. Taste nach einem der vorhergehenden Ansprüche, wobei im Formkörper (26) eine erste Reflektionsfläche (66) angeordnet ist, die ein vom Lichteintrittsbereich (32) kommendes Licht derart ablenkt, dass es zum Lichtaustrittsbereich (38) geführt werden kann, wobei die erste Reflektionsfläche (66) insbesondere durch eine Grenzfläche einer Ausnehmung (68) innerhalb des Formkörpers (26) gebildet ist.

8. Taste nach einem der vorhergehenden Ansprüche, wobei das Licht im Formkörper (26) am Lichteintrittsbereich (32) eine erste Lichthauptgerade (70) und am Lichtaustrittsbereich (38) eine zweite Lichthauptgerade (72) aufweist, wobei erste und zweite Lichthauptgerade (70, 72) zumindest ungefähr parallel zueinander sind.

9. Taste nach einem der vorhergehenden Ansprüche, wobei der Betätigungsbereich (34) dem Lichtaustrittsbereich (38) bei einer Betrachtung entlang der Betätigungsrichtung (28) gegenüber liegt.

10. Taste nach einem der vorhergehenden Ansprüche, wobei der Formkörper (26) einen Hauptkörper (74) und einen Fortsatz (76) mit einem Querabschnitt (78) und einem Längsabschnitt (80) aufweist, wobei der Betätigungsbereich (34) und der Lichtaustrittsbereich (38) an dem Hauptkörper (74) und der Lichteintrittsbereich (32) an dem Fortsatz (76) angeordnet sind und wobei der Querabschnitt (78) quer zur Betätigungsrichtung (28) vom Hauptkörper (74) absteht und in den Längsabschnitt (80) übergeht, der vom Hauptkörper (74) beabstandet ist und sich insbesondere zumindest ungefähr parallel zur Betätigungsrichtung (28) erstreckt.

11. Taste nach Anspruch 10, wobei der Fortsatz (76) eine zweite Reflektionsfläche (82) aufweist, die ein am Lichteintrittsbereich (32) eintretendes Licht in Richtung des Hauptkörpers (74) reflektiert und wobei die zweite Reflektionsfläche (82) insbesondere durch eine äußere Grenzfläche des Fortsatzes (76) bereitgestellt ist.

12. Taste nach Anspruch 11, wobei die erste und die zweite Reflektionsfläche (66, 82) so angeordnet sind, dass Licht, das am Lichteintrittsbereich (32) eintritt, zunächst zumindest ungefähr parallel zur Betätigungsrichtung (28) zur zweiten Reflektionsfläche (82) geführt wird, dort in eine Richtung quer zur Betätigungsrichtung (28) reflektiert und zur ersten Reflektionsfläche (66) geführt wird, dort in eine Richtung zumindest ungefähr parallel zur Betätigungsrichtung (28) reflektiert und dann zum Lichtaustrittsbereich (38) geführt wird.

13. Taste nach Anspruch 11 oder 12, wobei die erste und die zweite Reflektionsfläche (66, 82) zumindest ungefähr in einem Winkel (α) zwischen 20° und 70°, bevorzugt zwischen 30° und 60°, besonders bevorzugt zwischen 40° und 50° und insbesondere von zumindest ungefähr 45° zur Betätigungsrichtung (28) angeordnet sind.

14. Bedienanordnung (12) mit einer Blende (14), einem Gehäuseteil (16), einer Leiterplatte (18) und einer Taste (20) nach einem der vorhergehenden Ansprüche, wobei die Leiterplatte (18) eine Lichtquelle (22) und ein Schaltelement (24) aufweist und wobei die Taste (20) an der Blende (14) und am Gehäuseteil (16) derart verlagerbar gehalten ist, dass sich die Taste (20) bei einer Betätigung gegen das Schaltelement (24) drückt und das Schaltelement (24) betätigt.

15. Haushaltsgerät (10) mit einer Taste (20) nach einem der Ansprüche 1 bis 13.

## Claims

1. Button (20) for an operator control arrangement (12), wherein the button has a one-piece shaped body (26) which is composed of a light-guiding material, the shaped body (26) having:
- an operating direction (28) in which the shaped body (26) is displaced when the button (20) is operated,
- a functional side (30) which has a light entry region (32) and an operating region (34), wherein the operating region (34) is designed to operate a switching element (24) when the button (20) is operated,
- an operator control side (36) which has a light exit region (38), wherein the shaped body (26) is designed for guiding at least a fraction of light, which enters at the light entry region (32), to the light exit region (38),
- a resilient projection (40) which is integrally formed with the shaped body (26) transverse to the operating direction (28) and is designed in such a way that it deforms in an elastically resilient manner when it interacts with a housing part (16), in order to provide a restoring force for displacement of the button (20) back to an idle position when the button (20) is operated into an operating position,
- a force limiting element (42) which is integrally formed with the shaped body (26) transverse to the operating direction and is designed to absorb an excessive operating force by resilient displacement of the force limiting element (42) when the operating region (28) interacts with the switching element (24), and
- a first projection (52) which is integrally formed with the shaped body (26) and which is designed to interact with a housing part (16) in order to thus form an end stop for operation of the button (20).

2. Button according to claim 1, wherein the force limiting element (42) is in the form of a first bar with a first longitudinal side (44) and a first transverse side (46), and wherein the first longitudinal side (44) is preferably longer than the first transverse side (46), particularly preferably more than twice as long as the first transverse side (46).

3. Button according to any of the preceding claims, wherein the resilient projection (40) is in the form of a second bar with a second longitudinal side (48) and a second transverse side (50), and wherein the second longitudinal side (48) is preferably longer than the second transverse side (50), particularly preferably more than twice as long, and in particular more than three times as long, as the second transverse side (50).

4. Button according to any of the preceding claims, wherein the shaped body (26) has a second projection (54) transverse to the operating direction (28), said second projection being integrally formed with the shaped body (26) and being designed to interact with a panel (14) in order to thus form a rest stop for an idle position of the button (20).

5. Button according to any of the preceding claims, wherein the shaped body (26) has a guide element (56) parallel to the operating direction (28), said guide element being integrally formed with the shaped body (26) and being designed for guiding the button (20) during operation along the operating direction (28).

6. Button according to any of the preceding claims, wherein the operator control side (36) is at least approximately parallel to the functional side (30) and, in particular, the operating region (34) is arranged parallel to the light entry region (32), preferably in a common plane.

7. Button according to any of the preceding claims, wherein a first reflection surface (66) is arranged in the shaped body (26), said reflection surface deflecting light arriving from the light entry region (32) in such a way that it can be guided to the light exit region (38), wherein the first reflection surface (66) is formed, in particular, by a boundary surface of a recess (68) within the shaped body (26).

8. Button according to any of the preceding claims, wherein the light in the shaped body (26) has a first light main straight line (70) at the light entry region (32) and a second light main straight line (72) at the light exit region (38), wherein the first and second light main straight lines (70, 72) are at least approximately parallel to one another.

9. Button according to any of the preceding claims, wherein the operating region (34) is situated opposite the light exit region (38) when viewed along the operating direction (28).

10. Button according to any of the preceding claims, wherein the shaped body (26) has a main body (74) and an extension (76) having a transverse section (78) and a longitudinal section (80), wherein the operating region (34) and the light exit region (38) are arranged on the main body (74) and the light entry region (32) is arranged on the extension (76), and wherein the transverse section (78) protrudes from the main body (74) transverse to the operating direction (28) and merges with the longitudinal section (80) which is at a distance from the main body (74) and extends, in particular, at least approximately parallel to the operating direction (28).

11. Button according to claim 10, wherein the extension (76) has a second reflection surface (82) which reflects light, which enters at the light entry region (32), in the direction of the main body (74), and wherein the second reflection surface (82) is provided, in particular, by an outer boundary surface of the extension (76).

12. Button according to claim 11, wherein the first and the second reflection surface (66, 82) are arranged such that light which enters at the light entry region (32) is first guided to the second reflection surface (82) at least approximately parallel to the operating direction (28), is reflected there in a direction transverse to the operating direction (28) and is guided to the first reflection surface (66), is reflected there in a direction at least approximately parallel to the operating direction (28) and is then guided to the light exit region (38).

13. Button according to any of claims 11 or 12, wherein the first and the second reflection surface (66, 82) are arranged at least approximately at an angle (α) of between 20° and 70°, preferably between 30° and 60°, particularly preferably between 40° and 50°, and in particular of at least approximately 45°, in relation to the operating direction (28).

14. Operator control arrangement (12) having a panel (14), a housing part (16), a printed circuit board (18) and a button (20) according to any of the preceding claims, wherein the printed circuit board (18) has a light source (22) and a switching element (24), and wherein the button (20) is mounted in a displaceable manner on the panel (14) and on the housing part (16) in such a way that the button (20), when it is operated, presses against the switching element (24) and operates the switching element (24).

15. Domestic appliance (10) having a button (20) according to any of claims 1 to 13.

## Revendications

1. Touche (20) destinée à un dispositif de commande (12), où la touche comprend un corps moulé en une seule pièce (26) constitué d'un matériau conduisant la lumière, le corps moulé (26) comprenant :
- une direction d'actionnement (28) dans laquelle le corps moulé (26) se déplace lors d'un actionnement de la touche (20),
- une face fonctionnelle (30) qui comprend une zone d'entrée de lumière (32) et une zone d'actionnement (34), où la zone d'actionnement (34) est conçue pour actionner un élément de commutation (24) lors d'un actionnement de la touche (20),
- une face de commande (36) qui comprend une zone de sortie de lumière (38), où le corps moulé (26) est conçu pour guider au moins une partie d'une lumière incidente sur la zone d'entrée de lumière (32) vers la zone de sortie de lumière (38),
- un épaulement élastique (40) qui est réalisé solidaire du corps moulé (26) transversalement à la direction d'actionnement (28) et qui est conçu de manière à se déformer élastiquement à la manière d'un ressort en coopérant avec une partie de boîtier (16) afin de fournir, lors d'un actionnement de la touche (20) à une position d'actionnement, une force de rappel destinée à ramener la touche (20) à une position de repos,
- un élément de limitation de force (42) qui est réalisé solidaire du corps moulé (26) transiversalement à la direction d'actionnement et est conçu pour absorber une force d'actionnement excessive au moyen d'un déplacement élastique de l'élément de limitation de force (42) lorsque la zone d'actionnement (28) coopère avec l'élément de commutation (24), et
- un premier épaulement (52) qui est réalisé solidaire du corps moulé (26) et est conçu pour coopérer avec une partie de boîtier (16) afin de former ainsi une butée de fin de course pour un actionnement de la touche (20).

2. Touche selon la revendication 1, où l'élément de limitation de force (42) est réalisé sous la forme d'une barrette ayant un premier côté longitudinal (44) et un premier côté transversal (46) et où le premier côté longitudinal (44) est de préférence plus long que le premier côté transversal (46), et a notamment de préférence une longueur supérieure à plus du double de celle du premier côté transversal (46).

3. Touche selon l'une quelconque des revendications précédentes, où l'épaulement élastique (40) est réalisé sous la forme d'une première barrette ayant un second côté longitudinal (48) et un second côté transversal (50) et où le second côté longitudinal (48) est de préférence plus long que le second côté transversal (50) et a notamment de préférence une longueur supérieure à plus du double et notamment à plus du triple de celle du second côté transversal (50).

4. Touche selon l'une quelconque des revendications précédentes, où le corps moulé (26) comprend, transversalement à la direction d'actionnement (28), un second épaulement (54) qui est réalisé solidaire du corps moulé (26) et est conçu pour coopérer avec un volet (14) et former ainsi une butée de fin de course pour une position de repos de la touche (20).

5. Touche selon l'une quelconque des revendications précédentes, où le corps moulé (26) comprend un élément de guidage (56) parallèle à la direction d'actionnement (28) qui est réalisé solidaire du corps moulé (26) et est conçu pour guider la touche (20) pendant un actionnement effectué suivant la direction d'actionnement (28).

6. Touche selon l'une quelconque des revendications précédentes, où la face de commande (36) est au moins sensiblement parallèle à la face fonctionnelle (30) et la zone d'actionnement (34) est notamment disposée parallèlement à la zone d'entrée de lumière (32), de préférence, dans un plan commun.

7. Touche selon l'une quelconque des revendications précédentes, où dans le corps moulé (26) se trouve une première surface réfléchissante (66) qui dévie une lumière provenant de la zone d'entrée de lumière (32) de manière à ce qu'elle puisse être guidée vers la zone de sortie de lumière (38), où la première surface réfléchissante (66) est notamment formée par une surface de séparation d'un évidement (68) ménagé à l'intérieur du corps moulé (26).

8. Touche selon l'une quelconque des revendications précédentes, où la lumière comprend dans le corps moulé (26), dans la zone d'entrée de lumière (32), un premier chemin optique principal (70) et dans la zone de sortie de lumière (38), un second chemin optique principal (72), où les premier et second chemins optiques principaux (70, 72) sont au moins approximativement parallèles l'un à l'autre.

9. Touche selon l'une quelconque des revendications précédentes, où la zone d'actionnement (34) se situe en face de la zone de sortie de lumière (38) lorsqu'on l'observe dans la direction d'actionnement (28).

10. Touche selon l'une quelconque des revendications précédentes, où le corps moulé (26) comprend un corps principal (74) et un prolongement (76) ayant une partie transversale (78) et une partie longitudinale (80), où la zone d'actionnement (34) et la zone de sortie de lumière (38) sont disposées sur le cops principal (74) et la zone d'entrée de lumière (32) est disposée sur le prolongement (76) et où la partie transversale (78) est espacée du corps principal (74) transversalement à la direction d'actionnement (28) et se prolonge dans la partie longitudinale (80) qui est espacée du corps principal (74) et s'étend notamment au moins approximativement parallèlement à la direction d'actionnement (28).

11. Touche selon la revendication 10, où le prolongement (76) comprend une seconde surface réfléchissante (82) qui réfléchit une lumière incidente sur la zone d'entrée de lumière (32) dans la direction du corps principal (74) et où la seconde surface réfléchissante (82) est notamment formée par une surface de séparation extérieure du prolongement (76).

12. Touche selon la revendication 11, où les première et seconde surfaces tréfléchissantes (66, 82) sont disposées de manière à ce que la lumière incidente sur la zone d'entrée de lumière (32) soit guidée tout d'abord au moins approximativement parallèlement à la direction d'actionnement (28) vers la seconde surface réfléchissante (82), y soit réfléchie dans une direction transversale à la direction d'actionnement (28) et soit guidée vers la première surface réfléchissante (66) pour y être réfléchie dans une direction au moins approximativement parallèle à la direction d'actionnement (28) et ensuite guidée vers la zone de sortie de lumière (38).

13. Touche selon la revendication 11 ou 12, où les première et seconde surfaces réfléchissantes (66, 82) sont disposées au moins approximativement sous un angle (α) compris entre 20° et 70° et de préférence, entre 30° et 60°, et plus préférablement, entre 40° et 50° et notamment d'au moins approximativement 45° par rapport à la direction d'actionnement (28).

14. Dispositif de commande (12) comportant un volet (14), une partie de boîtier (16), une plaque conductrice (18) et une touche (20) selon l'une quelconque des revendications précédentes, où la plaque conductrice (18) comprend une source de lumière (22) et un élément de commutation (24) et la touche (20) est maintenue afin de pouvoir être déplacée sur le volet (14) et sur la partie de boîtier (16) de manière à ce que la touche (20), lors d'un actionnement, appuie sur l'élément de commutation (24) et actionne l'élément de commutation (24).

15. Appareil ménager (10) comportant une touche (20) selon l'une quelconque des revendications 1 à 13.
